# EUROPEAN PATENT APPLICATION

(11) **EP 4 686 624 A1**
(43) Date of publication of application: **04.02.2026**
(21) Application number: 24191459.7
(22) Date of filing: 29.07.2024
(51) Int. Cl.: B60T 8/17, B60T 8/172, B60W 40/12, B60W 50/00, G06V 20/56

(54) **A CONTROL UNIT AND A METHOD FOR DETERMINING THE NUMBER OF TRAILERS IN A TRACTOR-TRAILER COMBINATION BY USING COMPUTER VISION**

(71) Applicant: Volvo Truck Corporation, 405 08 Göteborg (SE)
(72) Inventor: CORREA FIELD MORALES, Alejandro, Greensboro, 27407 (US); EINSTOSS, Gabriel, Greensboro, 27406 (US)
(74) Representative: Zacco Sweden AB

(57) **Abstract**

A control unit for determining the number of trailers towed by a tractor unit in a tractor-trailer combination, wherein the control unit comprises a computer vision system for analyzing images. The control unit is configured to: obtain vehicle sensor data, wherein the vehicle sensor data comprises a steering angle and images from a left side camera and a right side camera, select images obtained from the left side camera or the right side camera based on the steering angle, wherein a steering angle indicative of a left turn directs image selection from the left side camera, and a steering angle indicative of a right turn directs image selection from the right side camera, and determine the number of trailers towed by the tractor unit by applying the computer vision system to analyze the selected images.

## Description

### TECHNICAL FIELD

The disclosure relates generally to road train and long combination vehicles. In particular aspects, the disclosure relates to a control unit and a method for determining the number of trailers in a tractor-trailer combination by using computer vision. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the heavy trucking industry, it is common for vehicles to run multiple trailers to increase load capacity and operational efficiency. The addition of multiple trailers significantly alters the vehicle dynamics, particularly impacting maneuverability and the braking system. Traditional braking controllers are typically not configured to automatically adapt to the number of trailers in a tractor-trailer combination and may require manual adjustments of the number of trailers being towed. This manual adjustment process is not only time-consuming but also prone to errors, potentially compromising the braking efficiency and overall control of the vehicle.

Given these limitations, there is a need to develop improved control units and methods for managing vehicles with multiple trailers that do not require manual intervention from the driver.

### SUMMARY

According to a first aspect of the disclosure, a control unit for determining the number of trailers towed by a tractor unit in a tractor-trailer combination is disclosed. The control unit comprises a computer vision system for analyzing images. The control unit is configured to obtain vehicle sensor data, wherein the vehicle sensor data comprises a steering angle and images from a left side camera and a right side camera. The control unit is further configured to select images obtained from the left side camera or the right side camera based on the steering angle, wherein a steering angle indicative of a left turn directs image selection from the left side camera, and a steering angle indicative of a right turn directs image selection from the right side camera. The control unit is then configured to determine the number of trailers by applying the computer vision system to analyze the selected images. The first aspect of the disclosure may seek to automatically determine the number of trailers in a tractor-trailer combination. A technical benefit may include eliminating the need for the driver to manually adjust for the number of trailers.

Optionally in some examples, including in at least one preferred example, the control unit is further configured to determine articulation angle and/or position of each trailer relative to the tractor unit by applying a computer vision system to analyze the selected images. A technical benefit may include that articulation angle and/or position of each trailer can be used to more accurately describe the vehicle's current state. These parameters can also be applied to a vehicle dynamics model to improve the estimation of future vehicle states, which, for example, may be used to enhance vehicle trajectory planning and vehicle motion management.

Optionally in some examples, including in at least one preferred example, the control unit is further configured to select images obtained from the left side camera or the right side camera based on the steering angle over a period of time. A technical benefit may include that this measure more accurately represents the angle of the tractor unit in relation to the trailers, as a change in the steering angle does not immediately impact all of the towed trailers.

Optionally in some examples, including in at least one preferred example, the computer vision system comprises a machine learning model, e.g., a neural network or a convolutional neural network, that has been trained on detecting trailers from a dataset of images associated with labels, wherein labels comprise number of trailers. The labels may further comprise articulation angle and/or position of each trailer relative to the tractor unit. A technical benefit may include enhanced accuracy in determining the number of trailers as machine learning models trained from a dataset of labeled images can significantly improve the control unit's ability to detect and correctly classify trailers.

Optionally in some examples, including in at least one preferred example, the computer vision system is configured to apply a Hough transform to determine the number of trailers. A technical benefit may include improved performance in detecting rectangular shapes in the selected images.

Optionally in some examples, including in at least one preferred example, the control unit is further configured to adjust a braking controller duty cycle to account for the determined number of trailers. A technical benefit may include improved braking performance of the tractor-trailer combination.

Optionally in some examples, including in at least one preferred example, the control unit is further configured to select an operational design domain based on the detected number of trailers. A technical benefit may include improved safety as speed limit and various safety margins may be adjusted to account for the determined number of trailers.

According to a second aspect of the disclosure, a tractor unit for towing multiple trailers in a tractor-trailer combination is disclosed. The tractor unit comprises a steering angle sensor a left side camera and a right side camera. The tractor unit further comprises a control unit according to any of the examples of the first aspect of the disclosure. The second aspect of the disclosure may seek to automatically determine the number of trailers in a tractor-trailer combination. A technical benefit may include eliminating the need for the driver to manually adjust for the number of trailers.

According to a third aspect of the disclosure, a method for determining the number of trailers towed by a tractor unit in a tractor-trailer combination is disclosed. The method comprises the step of obtaining vehicle sensor data, wherein the vehicle sensor data comprises a steering angle and images from a left side camera and a right side camera. The method also comprises selecting images obtained from the left side camera or the right side camera based on the steering angle, where a steering angle indicative of a left turn directs image selection from the left side camera, and a steering angle indicative of a right turn directs image selection from the right side camera. Finally, the method comprises determining the number of trailers by applying the computer vision system to analyze the selected images. The third aspect of the disclosure may seek to automatically determine the number of trailers in a tractor-trailer combination. A technical benefit may include eliminating the need for the driver to manually adjust for the number of trailers.

Optionally in some examples, including in at least one preferred example, the method further comprises determining articulation angle and/or position of each trailer relative to the tractor unit by applying a computer vision system to analyze the selected images. A technical benefit may include that articulation angle and/or position of each trailer can be used to more accurately describe the vehicle's current state. These parameters can also be applied to a vehicle dynamics model to improve the estimation of future vehicle states, which, for example, may be used to enhance vehicle trajectory planning and vehicle motion management.

Optionally in some examples, including in at least one preferred example, the method further comprises selecting images obtained from the left side camera or the right side camera based on the steering angle over a period of time. A technical benefit may include that this measure more accurately represents the angle of the tractor unit in relation to the trailers, as a change in the steering angle does not immediately impact all of the towed trailers.

Optionally in some examples, including in at least one preferred example, the computer vision system comprises a machine learning model, e.g., a neural network or a convolutional neural network, that has been trained on detecting trailers from a dataset of images associated with labels, wherein labels comprise number of trailers. The labels may further comprise articulation angle and/or position of each trailer relative to the tractor unit. A technical benefit may include enhanced accuracy in determining the number of trailers as machine learning models trained from a dataset of labeled images can significantly improve the control unit's ability to detect and correctly classify trailers.

Optionally in some examples, including in at least one preferred example, the computer vision system is configured to apply a Hough transform to determine the number of trailers. A technical benefit may include improved performance in detecting rectangular shapes in the selected images.

Optionally in some examples, including in at least one preferred example, the method comprises adjusting the braking controller duty cycle to account for the determined number of trailers. A technical benefit may include improved braking performance of the tractor-trailer combination.

Optionally in some examples, including in at least one preferred example, the method further comprises adjusting, wherein adjusting comprises selecting an operational design domain based on the detected number of trailers. A technical benefit may include improved safety as speed limit and various safety margins may be adjusted to account for the determined number of trailers.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram of a tractor unit comprising a left side and right side cameras, a steering angle sensor and a control unit for determining the number of trailers towed by the tractor unit.
FIG. 2 shows an example of a tractor-trailer combination wherein the steering angle reflects a right turn.
FIG. 3A shows an example of the left side camera image during a right turn.
FIG. 3B shows an example of the right side camera image during a right turn.
FIG. 4 is a flow chart of a method for determining the number of trailers towed by a tractor unit in a tractor-trailer combination.
FIG. 5A schematically illustrates a control unit.
FIG. 5B shows an example of a computer program product.
FIG. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

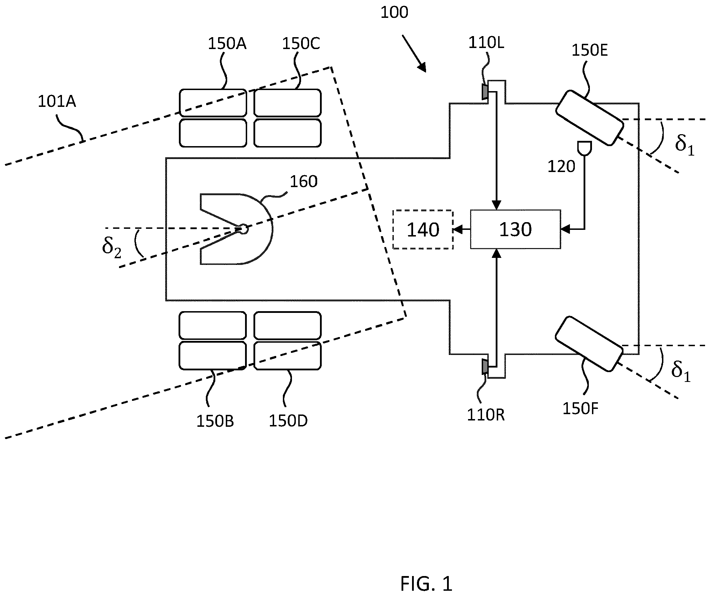

Fig. 1 illustrates a first aspect of the disclosure relating to a control unit 130 for determining the number of trailers towed by a tractor unit 100 in a tractor-trailer combination 200. Throughout this text, the term tractor-trailer combination will refer to configurations that allow for multiple trailers, commonly known as road trains or long combination vehicles. The tractor unit 100 typically comprises driven wheels 150A, 150B, 150C, 150D on one or more rear axles and a set of steerable non-driven wheels 150E, 150F on a front axle. The tractor unit 100 may also comprise a fifth wheel hitch to connect to a first trailer 101A. The control unit 130 is configured to obtain vehicle sensor data, wherein the vehicle sensor data comprises a steering angle δ₁, δ₂ and images from a left side camera 110L and a right side camera 110R.

The left side camera 110L and a right side camera 110R are typically mounted on the sides of the tractor cab and pointed rearward. Consequently, the trailers towed by the tractor unit 100 will fall within the field of view of at least one of the cameras 110L, 110R depending on steering angle δ₁, δ₂. The steering angle δ1, δ₂ will typically be represented by the front-wheel 150E, 150F steering angle δ₁ but can also be represented by a tractor-trailer articulation angle δ₂. A steering sensor 120 may provide the steering angle δ1 to the control unit 130. Alternatively, an articulation sensor may provide the tractor-trailer articulation angle δ₂ to the control unit 130.

Depending on the steering angle, certain trailers may not be visible to both cameras 110L, 110R simultaneously. To address this, the control unit can prioritize image selection from a camera where the trailers will be visible. In one example, the control unit 130 is configured to select images obtained from the left side camera 110L or the right side camera 110R based on the steering angle δ₁, δ₂. A steering angle δ₁, δ₂ indicative of a left turn will direct image selection from the left side camera 110L and a steering angle δ₁, δ₂ indicative of a right turn will direct image selection from the right side camera 110R.

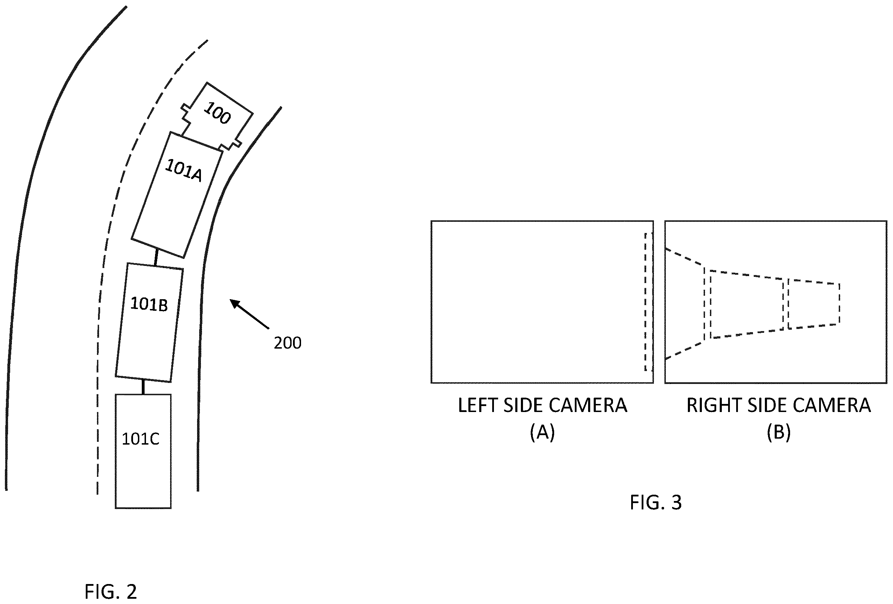

Fig. 2 illustrates an example of a tractor-trailer combination 200 comprising a tractor unit 100 and three trailer units 101A, 101B, 101C. In this example, the steering angle of the tractor-trailer combination 200 clearly indicates a right turn. Figs. 3A and 3B show the corresponding images from the left side camera 110L and right side camera 110R, respectively. These images are flipped horizontally to mimic the view of side mirrors. Since the tractor-trailer combination is turning right, only the first trailer is visible in the left camera 110L image, while all trailers are visible in the right side camera 110R image. Given that the steering angle indicates a right turn, only the right side camera 110R image will be used for determining the number of trailers.

Selecting images obtained from the left side camera 120L or the right side camera 120R may also be based on the steering angle δ₁, δ₂ over a period of time. In one example this may involve accumulating the steering angle over a period of time. An advantage of this measure may be that it more accurately represents the angle of the tractor unit 100 in relation to the trailers 101A, 101B, 101C. This is because a change in steering angle will not immediately impact all of the towed trailers 101A, 101B, 101C. Alternatively, a tractor-trailer vehicle dynamics model can be employed to determine the optimal camera selection based on the steering angle over a period of time. By considering the steering angle over a specific time period, the model can predict which side camera will be most effective in capturing the essential visual information.

The control unit 130 also comprises a computer vision system configured to analyze the selected images in order to determine the number of trailers towed by the tractor 100. In one example, the control unit may apply an existing computer vision system that has been implemented to support various levels of autonomous driving or object detection. Such system needs to continuously perceive and interpret the environment around the vehicle. This includes recognizing other vehicles, a capability that can be adapted for trailer detection.

In another example, the control unit may utilize an application-specific computer vision system configured to determine the number of trailers towed by the tractor unit 100. For this purpose, the computer vision system may employ a machine learning model that has been trained on detecting trailers from a dataset of labelled images, wherein the labeled images comprise the number of trailers. Furthermore, the labels in the dataset could include additional parameters such as distances, position and the angle between the tractor unit 100 and each trailer unit 101A, 101B, 101C, or the articulation angle between each trailer unit. An advantage of considering these additional parameters is that the computer vision system can also be used to determine the distance, relative positions and angles between the tractor unit 100 and each trailer unit 101A, 101B, 101, which can be used as input parameters to a tractor-trailer vehicle dynamics model.

The underlying technology for these computer vision systems generally involves neural networks, particularly convolutional neural networks (CNNs), which have proven highly effective at processing visual data and are well-suited for tasks involving image recognition and classification.

Furthermore, the control unit can employ additional computer-implemented methods to enhance the capabilities of the computer vision system. For instance, the system might utilize the Hough transform, a well-established technique in image analysis, to detect lines that form a rectangular surface. This capability is particularly useful in identifying the outlines of trailers, thus helping to determine the number of trailers being towed. Once these rectangular surfaces are identified, simple geometric transformations can be applied to calculate the angles of these surfaces relative to the tractor unit, providing crucial data on the orientation of each trailer. Additionally, the Hough transform can also be integrated with convolutional neural networks (CNNs) to improve reliability. This combination allows for more precise detection and can be especially beneficial in complex visual environments.

As mentioned above, the control unit 130 may be configured to determine the angle and/or position of each trailer relative to the tractor unit by applying the computer vision system to the selected images. An advantage of determining the angle and/or position of each trailer 101A, 101B, 101C relative to the tractor unit 100 is that these parameters can be used to more accurately describe the vehicle's current state. Additionally, these parameters can also be applied to a vehicle dynamics model to improve the estimation of future vehicle states, which, for example, may be used to enhance vehicle trajectory planning and vehicle motion management.

The control unit 130 may further be configured to adjust a braking controller 140 based on the determined number of trailers. In one example, a braking controller duty cycle is adjusted to account for the number of trailers. For example, the anti-lock braking system (ABS) pulsing strategy might be adjusted to increase the duty cycle in response to a higher number of trailers. The duty cycle refers to the proportion of time the braking controller 140 activates the trailer braking control line versus it being inactive during a braking event. This modification ensures that sufficient braking pressure is applied to manage the increased mass and momentum of additional trailers.

The control unit 130 may be further configured to select an operational design domain (ODD) based on the determined number of trailers. Typically, the control unit includes a memory configured to store multiple ODDs, where the ODDs have been defined to account for the number of trailers in the tractor-trailer combination 200. Each stored ODD is designed with safety margins tailored to specific vehicle configurations and operational conditions. This selection enables the vehicle to operate within an ODD that best suits its current configuration, enhancing safety and performance under varying conditions. A technical benefit of this system is that it allows the vehicle to optimize its operational parameters for different tractor-trailer combinations, thus improving overall efficiency and safety.

Figs. 1-3 also illustrate a second aspect of the disclosure, relating to a tractor unit 100 for towing multiple trailers in a tractor-trailer combination 200. The tractor unit 100 will typically comprise driven wheels 150A, 150B, 150C, 150D on one or more rear axles and a set of steerable non-driven wheels 150E, 150F on a front axle. The tractor unit 100 may also comprise a fifth wheel hitch to connect to a first trailer 101A. The tractor unit 100 comprises a left side camera 120L, a right side camera 120R, a steering angle sensor 120 for measuring the front-wheel 150E, 150F steering angle δ₁ or articulation angle δ₂. The tractor unit 100 further comprises a control unit 130 configured to determine the number of trailers towed by the tractor unit 100, wherein the control unit 130 is configured to operate according to any of the examples provided above.

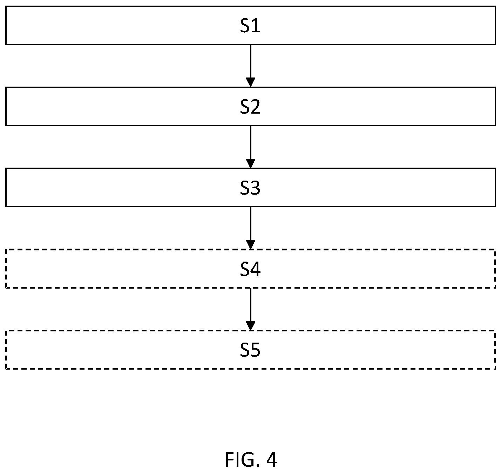

Fig. 4 illustrates a third aspect of the disclosure, relating to a method for determining the number of trailers towed by a tractor unit 100 in a tractor-trailer combination 200. The method comprises the steps of obtaining S1, selecting S2 and determining S3. The method may further comprise the steps of determining S4 and adjusting S5. It should be noted that any of the aforementioned aspects relating to the control unit 130 and the tractor unit 100 are also applicable to the method.

The step of obtaining S1 comprises obtaining vehicle sensor data, wherein the vehicle sensor data comprises a steering angle δ₁, δ₂ and images from a left side camera 110L and a right side camera 110R. The left side camera 110L and a right side camera 110R are typically mounted on the sides of the tractor cab and pointed rearward. Consequently, the trailers towed by the tractor unit 100 will fall within the field of view of at least one of the cameras 110L, 110R depending on steering angle. The steering angle will typically be represented by the front-wheel 150E, 150F steering angle δ₁ but can also be represented by a tractor-trailer articulation angle δ₂. A steering sensor 120 may provide the steering angle δ₁. Alternatively, an articulation sensor may provide the tractor-trailer articulation angle δ₂.

The step of selecting S2 comprises selecting images obtained from the left side camera 110L or the right side camera 110R based on the steering angle δ₁, δ₂. Depending on the steering angle, certain trailers may not be visible to both cameras 110L, 110R simultaneously. To address this, the control unit can prioritize image selection from a camera where the trailers will be visible. A steering angle indicative of a left turn will direct image selection from the left side camera 110L and a steering angle δ₁, δ₂ indicative of a right turn will direct image selection from the right side camera 110R. In another example, selecting S2 comprises selecting images obtained from the left side camera 120L or the right side camera 120R based on the steering angle over a period of time. This may involve the accumulated steering angle over a period of time. An advantage of this measure may be that it more accurately represents the angle of the tractor unit 100 in relation to the trailers 101A, 101B, 101C. This is because a change in steering angle will not immediately impact all of the towed trailers 101A, 101B, 101C. Alternatively, selecting S2 may comprise employing a tractor-trailer vehicle dynamics model to determine the optimal camera selection based on the steering angle over a period of time. By considering the steering angle over a specific time period, the model can predict which side camera will be most effective in capturing the essential visual information.

The step of determining S3 comprises determining the number of trailers by applying a computer vision system to the selected images. The computer vision system used for determining the number of trailers is the same as the one described in the first aspect of the invention.

The step of determining S4 comprises determining angle and/or position of each trailer relative to the tractor unit by applying the computer vision system to the selected images. The computer vision system used for determining angle and/or position of each trailer relative to the tractor unit to is the same as the one described in the first aspect of the invention.

The step of adjusting S5 may comprise adjusting a braking controller duty cycle to the determined number of trailers. For example, the anti-lock braking system (ABS) pulsing strategy might be adjusted to increase the duty cycle in response to a higher number of trailers. The duty cycle refers to the proportion of time the braking controller 140 activates the trailer braking control line versus it being inactive. This modification ensures that sufficient braking pressure is applied to manage the increased mass and momentum of additional trailers.

In another example, the step of adjusting S5 comprises selecting an operational design domain (ODD) based on the determined number of trailers. This involves selecting an ODD from multiple stored ODDs, where the ODDs have been defined to account for the number of trailers in the tractor-trailer combination 200. Each stored ODD is designed with safety margins tailored to the specific vehicle configurations and operational conditions. This selection enables the vehicle to operate within an ODD that best suits its current configuration, enhancing safety and performance under varying conditions.

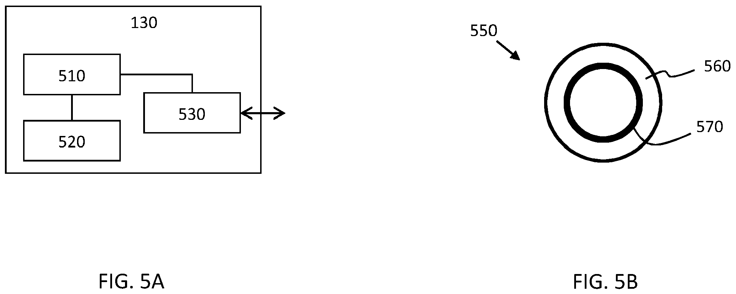

FIG. 5A schematically illustrates, in terms of a number of functional units, the components of a control unit 122 according to aspects of the discussions and methods disclosed herein. This control unit 122 may typically be comprised in the vehicle 100. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA.

Particularly, the processing circuitry 510 is configured to cause the control unit 122 to perform a set of operations, or steps, such as the methods discussed in connection to FIG. 4. For example, the storage medium 520 may store the set of operations, and the processing circuitry 510 may be configured to retrieve the set of operations from the storage medium 520 to cause the control unit 130 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 120 may further comprise an interface 530 for communications with at least one external device, such as an engine, a friction clutch, a clutch actuator, vehicle sensors or a gearbox. As such the interface 530 may comprise one or more transmitters and receivers, comprising analogue and digital components and a suitable number of ports for wireline or wireless communication.

The processing circuitry 510 controls the general operation of the control unit 122, e.g., by sending data and control signals to the interface 530 and the storage medium 520, by receiving data and reports from the interface 530, and by retrieving data and instructions from the storage medium 520. Other components, as well as the related functionality, of the control node are omitted in order not to obscure the concepts presented herein.

FIG. 5B shows an example of a computer program product. A computer readable medium 560 carrying a computer program 570 comprising program code means for performing the steps of aforementioned method when said program product is run on a computer or on processing circuitry 510 of a control unit 122.

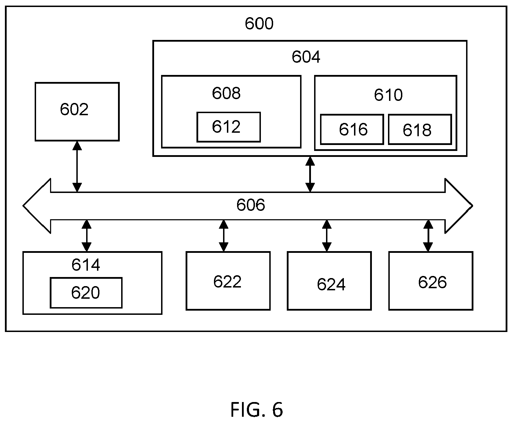

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data str [0063] Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 130 for determining the number of trailers towed by a tractor unit 100 in a tractor-trailer combination 200, the control unit 130 comprising a computer vision system for analyzing images, and wherein the control unit 130 is configured to: obtain vehicle sensor data, wherein the vehicle sensor data comprises a steering angle δ₁, δ₂ and images from a left side camera 110L and a right side camera 1 10R; select images obtained from the left side camera 110L or the right side camera 110R based on the steering angle δ1, δ2, wherein a steering angle δ₁, δ₂ indicative of a left turn directs image selection from the left side camera 110L, and a steering angle δ₁, δ₂ indicative of a right turn directs image selection from the right side camera 110R; determine the number of trailers by applying the computer vision system to analyze the selected images.

Example 2: The control unit 130 of example 1, wherein the control unit 130 is further configured determine articulation angle and/or position of each trailer relative to the tractor unit by applying the computer vision system to analyze the selected images.

Example 3: The control unit 130 of any of examples 1-2, wherein selecting images obtained from the left side camera 120L or the right side camera 120R is based on the steering angle δ₁, δ₂ over a period of time.

Example 4: The control unit 130 of any of examples 1-3, wherein the computer vision system comprises a machine learning model that has been trained on detecting trailers from a dataset of images associated with labels, wherein the labels comprise number of trailers.

Example 5: The control unit 130 of example 4, wherein the machine learning model is a neural network.

Example 6: The control unit 130 of any of examples 1-5, wherein the computer vision system applies a Hough transform to determine the number of trailers.

Example 7: The control unit 130 of any of examples 1-6, wherein the control unit 130 is further configured to adjust a braking controller 140 based on the determined number of trailers, such that a braking controller duty cycle is adjusted to account for the number of trailers.

Example 8: The control unit 130 of any of examples 1-7, wherein the control unit 130 is further configured to select an operational design domain based on the detected number of trailers.

Example 9: The control unit 130 of any of examples 1-8, wherein the steering angle δ₁, δ₂ is a front-wheel steering angle δ₁ and/or a tractor-trailer articulation angle δ₂.

Example 10: A tractor unit 100 for towing multiple trailers in a tractor-trailer combination 200, the tractor unit 100 comprising a left side camera 120L and a right side camera 120R, a steering angle δ₁, δ₂ sensor, and a control unit according to any of examples 1-9.

Example 11: A method for determining the number of trailers towed by a tractor unit 100 in a tractor-trailer combination 100, the method comprising: obtaining S1 vehicle sensor data, wherein the vehicle sensor data comprises a steering angle δ₁, δ₂ and images from a left side camera 110L and a right side camera 110R; selecting S2 images obtained from the left side camera 110L or the right side camera 110R based on the steering angle δ₁, δ₂, wherein a steering angle δ₁, δ₂ indicative of a left turn directs image selection from the left side camera 110L, and a steering angle δ₁, δ₂ indicative of a right turn directs image selection from the right side camera 110R; determining S3 the number of trailers by applying the computer vision system to analyze the selected images.

Example 12: The method of example 11, further comprising determining S4 articulation angle and/or position of each trailer relative to the tractor unit by applying the computer vision system to analyze the selected images.

Example 13: The method of any of examples 11-12, wherein selecting S2 comprises selecting images based on the steering angle δ₁, δ₂ over a period of time.

Example 14: The method of any of examples 11-13, wherein the computer vision system comprises a machine learning model that has been trained on detecting trailers from a dataset of labeled images, wherein the labels comprise number of trailers.

Example 15: The method of example 14, wherein the machine learning model is a neural network.

Example 16: The method of any of examples 11-15, wherein the computer vision system applies a Hough transform to determine the number of trailers.

Example 17: The method of any of examples 11-16, further comprising adjusting S5, wherein adjusting comprises adjusting a braking controller duty cycle based on the determined number of trailers.

Example 18: The method of any of examples 11-17, further comprising adjusting S5, wherein adjusting comprises selecting an operational design domain based on the determined number of trailers.

Example 19: A computer program 550 comprising program code means for performing the steps of any of examples 11-18 when said program is run on a computer or on processing circuitry 510 of a control unit 130.

Example 20: A computer readable medium 560 carrying a computer program 570 comprising program code means for performing the steps of any of examples 11-18 when said program product is run on a computer or on processing circuitry 510 of a control unit 130.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (130) for determining the number of trailers towed by a tractor unit (100) in a tractor-trailer combination (200), the control unit (130) comprising a computer vision system for analyzing images, and wherein the control unit (130) is configured to:
obtain vehicle sensor data, wherein the vehicle sensor data comprises a steering angle (δ₁, δ₂) and images from a left side camera (110L) and a right side camera (110R);
select images obtained from the left side camera (110L) or the right side camera (110R) based on the steering angle (δ₁, δ₂), wherein a steering angle (δ₁, δ₂) indicative of a left turn directs image selection from the left side camera (110L), and a steering angle (δ₁, δ₂) indicative of a right turn directs image selection from the right side camera (110R);
determine the number of trailers by applying the computer vision system to analyze the selected images.

2. The control unit (130) of claim 1, wherein the control unit (130) is further configured determine articulation angle and/or position of each trailer relative to the tractor unit by applying the computer vision system to analyze the selected images.

3. The control unit (130) of any of claims 1-2, wherein selecting images obtained from the left side camera (120L) or the right side camera (120R) is based on the steering angle (δ₁, δ₂) over a period of time.

4. The control unit (130) of any of claims 1-3, wherein the computer vision system comprises a machine learning model that has been trained on detecting trailers from a dataset of images associated with labels, wherein the labels comprise number of trailers.

5. The control unit (130) of claim 4, wherein the machine learning model is a neural network.

6. The control unit (130) of any of claims 1-5, wherein the control unit (130) is further configured to adjust braking controller (140) based on the determined number of trailers, such that a braking controller duty cycle is adjusted to account for the number of trailers.

7. The control unit (130) of any of claims 1-6, wherein the steering angle (δ₁, δ₂) is a front-wheel steering angle (δ₁) and/or a tractor-trailer articulation angle (δ₂).

8. A tractor unit (100) for towing multiple trailers in a tractor-trailer combination (200), the tractor unit (100) comprising a left side camera (120L) and a right side camera (120R), a steering angle (δ₁, δ₂) sensor, and a control unit according to any of claims 1-7.

9. A method for determining the number of trailers towed by a tractor unit (100) in a tractor-trailer combination (100), the method comprising:
obtaining (S1) vehicle sensor data, wherein the vehicle sensor data comprises a steering angle (δ₁, δ₂) and images from a left side camera (110L) and a right side camera (110R);
selecting (S2) images obtained from the left side camera (110L) or the right side camera (110R) based on the steering angle (δ₁, δ₂), wherein a steering angle (δ₁, δ₂) indicative of a left turn directs image selection from the left side camera (110L), and a steering angle (δ₁, δ₂) indicative of a right turn directs image selection from the right side camera (110R);
determining (S3) the number of trailers by applying the computer vision system to analyze the selected images.

10. The method of claim 9, further comprising determining (S4) articulation angle and/or position of each trailer relative to the tractor unit by applying the computer vision system to analyze the selected images.

11. The method of any of claims 9-10, wherein selecting (S2) comprises selecting images based on the steering angle (δ₁, δ₂) over a period of time.

12. The method of any of claims 9-11, wherein the computer vision system comprises a machine learning model that has been trained on detecting trailers from a dataset of labeled images, wherein the labels comprise number of trailers.

13. The method of claim 12, wherein the machine learning model is a neural network.

14. The method of any of claims 9-13, further comprising adjusting S5, wherein adjusting comprises adjusting braking controller duty cycle based on the determined number of trailers.

15. A computer readable medium (560) carrying a computer program (570) comprising program code means for performing the steps of any of claims 9-14 when said program product is run on a computer or on processing circuitry (510) of a control unit (130).
